# FASCICULE DE BREVET EUROPEEN

(11) **EP 1 017 302 B1**
(45) Date de publication et mention de la délivrance du brevet: **17.09.2003**
(21) Numéro de dépôt: 98947591.8
(22) Date de dépôt: 25.09.1998
(51) Int. Cl.: A47J 43/07

(54) **APPAREIL ELECTROMENAGER DE PREPARATION CULINAIRE, DU GENRE ROBOT MENAGER MULTI-USAGES, COMPORTANT UN ENSEMBLE DE TRAVAIL ROTATIF ASSOCIE A UN MOYEN D'APPUI**
ELEKTRISCHE KÜCHENMASCHINE ZUM ZUBEREITEN VON NAHRUNGSMITTELN, WIE EINE MEHRZWECKKÜCHENMASCHINE MIT EINEM TRAGELEMENT FÜR DIE ROTIERENDE ARBEITSVORRICHTUNG
ELECTRICAL COOKING APPLIANCE, SUCH AS A MULTI FUNCTION FOOD-PREPARATION APPLIANCE, COMPRISING A ROTATING WORKING SET ASSOCIATED WITH SUPPORT MEANS

(30) Priorité: 25.09.1997 FR 9712174
(43) Date de publication de la demande: 12.07.2000
(73) Titulaire: SEB S.A., 69130 Ecully (FR)
(72) Inventeur: PEYRAS, Lionel, F-65100 Jarret (FR); LACOSTE, Gérard, F-65400 Beaucens (FR)
(74) Mandataire: Kiehl, Hubert
(86) Numéro de dépôt international: FR9802058
(87) Numéro de publication internationale: WO99015061

(56) Documents cités:
- DE-C- 382 060
- FR-A- 1 489 059
- FR-A- 2 743 710
- US-A- 4 813 624

## Description

### DOMAINE TECHNIQUE

La présente invention se rapporte au domaine technique général des appareils électroménagers de préparation culinaire, du genre robot ménager multi-usages ou polyvalent ou encore mini ou multi-hachoir pourvu d'un outil de travail rotatif susceptible d'être mis en place contre le fond d'un récipient.

La présente invention concerne un appareil électroménager de préparation culinaire, du genre robot ménager multi-usages, comportant un récipient de travail, un ensemble de travail rotatif entraîné par un bloc moteur avec un axe entraîneur apte à porter un outil de travail, et un moyen d'appui prévu pour être mis en place contre le fond du récipient de travail, ledit ensemble de travail en position de travail dans le récipient de travail étant monté libre en rotation par rapport au moyen d'appui.

Dans le cadre de l'invention, il convient d'entendre par le terme appareil électroménager de préparation culinaire, du genre robot ménager multi-usages, tous les appareils électriques dont l'outil de travail rotatif doit être disposé dans un réceptacle sensiblement en appui contre le fond de manière à pouvoir assumer la fonction dévolue à l'outil, et ce indépendamment du type d'outil utilisé, dès l'instant qu'il est en rotation dans le réceptacle. Dès lors, le terme appareil de préparation culinaire revêt, au sens de l'invention un sens large incluant des appareils divers non limités par leur fonction de préparation culinaire qui peut consister à titre d'exemple non limitatif, à hacher, mélanger, broyer, émulsionner, etc...

### TECHNIQUE ANTERIEURE

La demande de brevet FR-A-2 743 710 décrit un appareil électroménager de préparation culinaire, du genre robot ménager multi-usages (ou polyvalent) comportant un récipient de travail, un ensemble de travail rotatif entraîné par un bloc moteur avec un axe entraîneur apte à porter un outil de travail, un moyen d'appui monté libre en rotation par rapport à l'ensemble de travail rotatif et prévu pour être mis en place contre le fond du récipient. Le moyen d'appui est solidaire de l'ensemble de travail rotatif. Le moyen d'appui est formé par exemple par une embase dans laquelle est emmanché un tourillon, lequel tourillonne dans un puits central ménagé dans le moyeu de l'ensemble de travail rotatif. Cette solution permet de disposer d'un récipient de travail ne comportant pas d'insert métallique, ce qui permet par exemple l'utilisation du récipient de travail dans un four à micro-ondes.

Les inconvénients de cette solution sont liés à la difficulté de nettoyer l'ensemble de travail et le moyen d'appui, solidaires et mobiles en rotation l'un par rapport à l'autre. En particulier la matière alimentaire dans laquelle sont plongés au moins partiellement l'ensemble de travail et le moyen d'appui est susceptible de s'infiltrer dans la liaison mécanique permet nt la rotation de l'ensemble de travail par rapport au moyen d'appui, par exemple autour du tourillon tournant dans le puits central. Il en résulte des conditions de nettoyage peu satisfaisantes, les parties concernées étant généralement difficiles d'accès. De plus la présence d'un outil de travail tranchant ne facilite pas les opérations de nettoyage.

### EXPOSE DE L'INVENTION

L'objet de l'invention vise en conséquence à porter remède aux différents inconvénients énumérés précédemment et à fournir un appareil électroménager de préparation culinaire de conception générale simplifiée dont le nettoyage est particulièrement aisé.

Les objets assignés à l'invention sont atteints à l'aide d'un appareil électroménager de préparation culinaire, du genre robot ménager multi-usages (ou polyvalent) comportant un récipient de travail, un ensemble de travail rotatif entraîné par un bloc moteur avec un axe entraîneur apte à porter un outil de travail, ledit ensemble étant susceptible d'être mis en place dans le récipient sensiblement contre le fond dudit récipient en association avec un moyen d'appui monté libre en rotation par rapport à l'ensemble de travail rotatif, caractérisé en ce que le moyen d'appui est constitué d'un ensemble séparé du récipient et de l'ensemble de travail rotatif (5,6,7) de manière à être susceptible d'être mis en place dans le récipient de travail indépendamment de l'ensemble de travail rotatif.

L'utilisateur peut ainsi nettoyer de manière complète et de façon aisée le moyen d'appui et l'ensemble de travail rotatif avant de les réutiliser. Le nettoyage est facilité car l'utilisateur ne risque pas de blesser pour nettoyer l'embase, celle-ci étant désolidarisée de l'ensemble de travail comprenant l'outil de travail. L'utilisateur peut accéder aux différentes surfaces du moyen d'appui et de l'ensemble de travail en contact avec la matière alimentaire.

Selon une version avantageuse de l'invention, un organe de maintien monté sur le moyen d'appui ou sur l'ensemble de travail est prévu pour solidariser de manière amovible le moyen d'appui et l'ensemble de travail.

Ainsi le moyen d'appui mis en place au fond du récipient de travail indépendamment de l'ensemble de travail peut être retiré du récipient de travail en association avec le moyen d'appui. L'utilisateur peut saisir l'ensemble de travail et retirer l'ensemble de travail et le moyen d'appui sans entrer en contact avec la préparation alimentaire.

### DESCRIPTION SOMMAIRE DES DESSINS

D'autres avantages et particularités de l'invention ressortiront mieux à l'aide de la description faite ci-après, en référence aux dessins annexés qui montrent à titre d'exemples non limitatifs, des formes de réalisation de l'objet de l'invention dans lesquels :
- La figure 1 montre selon une coupe longitudinale transversale partielle, une vue partielle éclatée d'un premier exemple de réalisation d'un appareil électroménager de préparation culinaire conforme à l'invention.
- La figure 2 montre selon une coupe transversale longitudinale identique à la figure 1, un premier exemple de réalisation d'un appareil électroménager de préparation culinaire conforme à l'invention dans lequel l'outil de travail est en position de travail contre le fond du récipient.
- Les figures 3a, 3b et 3c montrent selon une coupe longitudinale transversale partielle, des éléments d'une variante avantageuse de réalisation d'un appareil électroménager de préparation culinaire conforme à l'invention.
- Les figures 4a et 4b montrent selon une coupe longitudinale transversale partielle, des éléments d'une autre variante avantageuse de réalisation d'un appareil électroménager de préparation culinaire conforme à l'invention.
- La figure 5 montre selon une coupe longitudinale transversale partielle, une vue partielle éclatée d'un deuxième exemple de réalisation d'un appareil électroménager de préparation culinaire conforme à l'invention.

### MEILLEURE MANIERE DE REALISER L'INVENTION

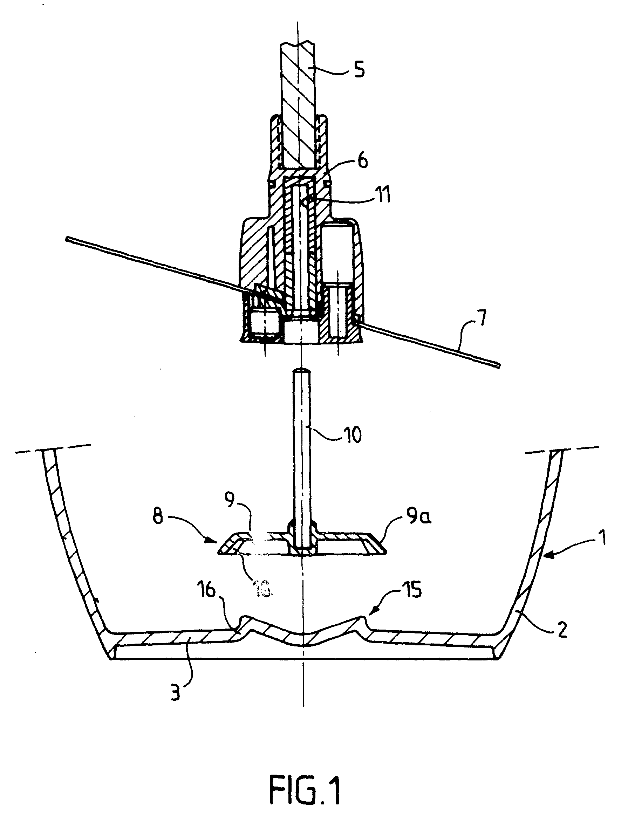

Les figures 1, 2 et 5 montrent selon des vues partielles un appareil électroménager de préparation culinaire, du genre mini ou multi-hachoirs par exemple, conforme à l'invention. L'appareil comporte un récipient de travail 1, montré partiellement, et réalisé en tous matériaux. De manière avantageuse, le récipient 1 est réalisé en tous matériaux permettant son utilisation dans un four à micro-ondes, tels que des matériaux à base plastique ou en verre.

Le récipient 1 est de toutes formes appropriées, et par exemple sensiblement cylindrique et est délimité extérieurement par des parois latérales 2 et un fond 3.

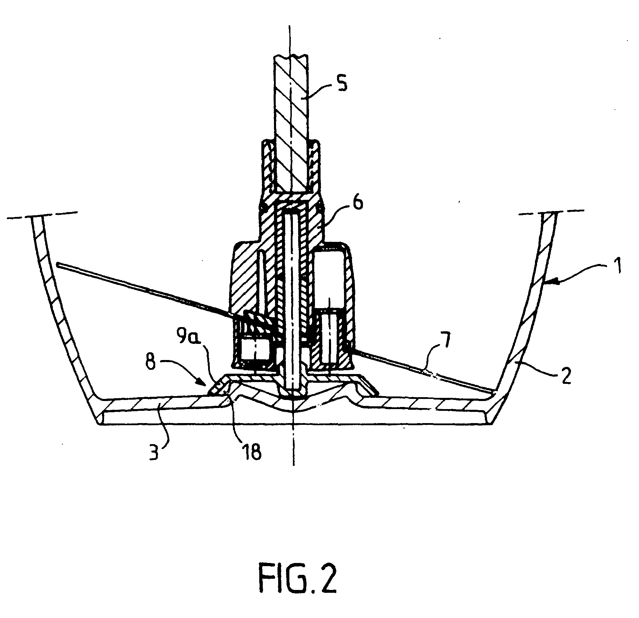

L'appareil électroménager montré de manière partielle aux figures 1, 2 et 5, comporte également un couvercle (non représenté aux figures) ainsi qu'un bloc moteur (non représenté aux figures) électrique monté de manière amovible ou non avec le couvercle. Le bloc moteur est solidaire d'un axe entraîneur 5 dont l'extrémité libre est solidaire, par exemple par emmanchement, d'un moyeu 6 apte à porter un outil de travail 7, par exemple un couteau. L'arbre entraîneur 5 forme avec le moyeu 6 et l'outil de travail 7 un ensemble de travail rotatif susceptible d'être mis en place dans le récipient 1 sensiblement contre le fond 3 dudit récipient en association avec un moyen d'appui 8 monté libre en rotation par rapport à l'ensemble de travail rotatif, tel que représenté à la figure 2.

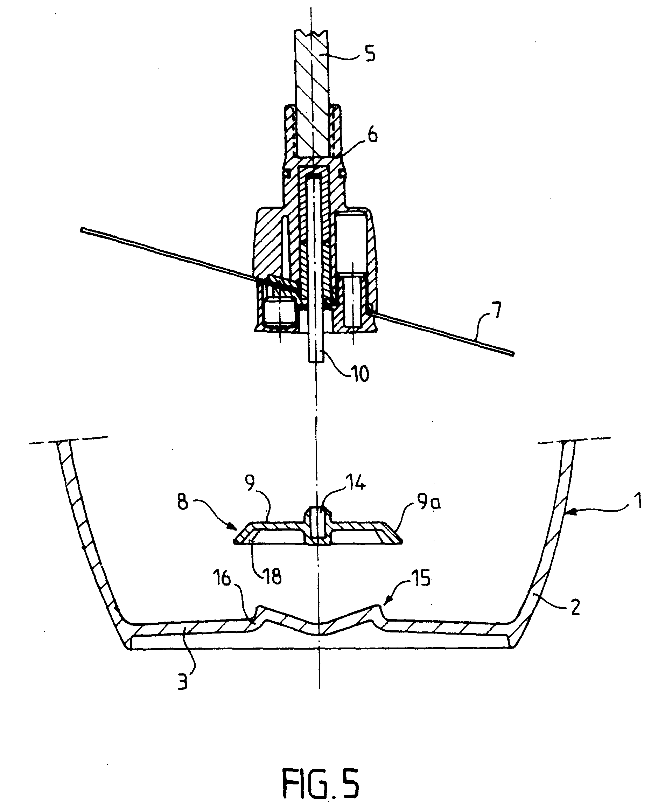

Selon une caractéristique importante de l'invention, le moyen d'appui 8 est susceptible d'être mis en place dans le récipient 1 indépendamment de l'ensemble de travail rotatif, tel que représenté aux figures 1 et 5.

Selon une version préférentielle de l'invention, le moyen d'appui 8 est formé par une embase 9, assimilable par exemple à un disque, de préférence sensiblement circulaire et susceptible d'être montée libre à rotation à l'extrémité de l'ensemble de travail par l'intermédiaire d'un tourillon 10.

Selon une version avantageuse de l'invention, représentée aux figures 1 à 4, le tourillon 10 est solidaire par une extrémité de l'embase 9, et par exemple emmanché en force dans un orifice central de cette dernière, et susceptible de tourillonner par son autre extrémité dans un puits central 11 ménagé dans le moyeu 6. Selon ce montage, le guidage en rotation de l'embase 9 est réalisé par le tourillon 10 tourrillonnant dans le puits 11 du moyeu 6, tel que représenté à la figure 2.

Selon une autre version avantageuse de l'invention, représentée à la figure 5, le tourillon 10 est solidaire par une extrémité du moyeu 6, et par exemple emmanché en force dans un orifice central de ce dernier, et suceptible de tourillonner par son autre extrémité dans un puits central 14 ménagé dans l'embase 9. Selon ce montage, le guidage en rotation de l'embase 9 est réalisé par le tourillon 10 tourillonnant dans le puits 14 de l'embase 9.

Selon une version préférée de l'invention, un organe de maintien monté sur le moyen d'appui 8 ou sur l'ensemble de travail est prévu pour solidariser de manière amovible le moyen d'appui 8 et l'ensemble de travail.

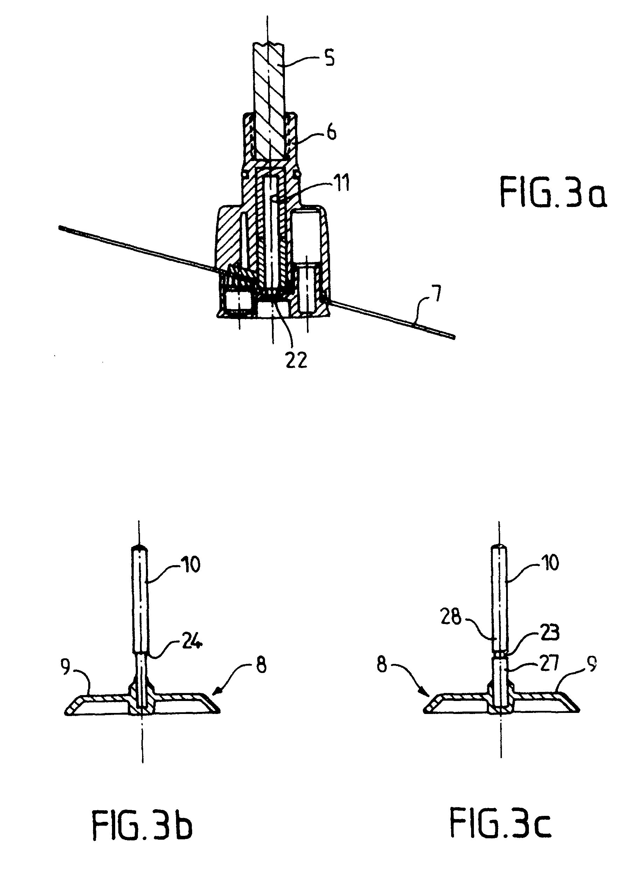

Selon un exemple de réalisation de la version préférée de l'invention, montré aux figures 3a, 3b et 3c, l'organe de maintien est un clips 22 monté sur le moyeu 6, par exemple à l'extrémité débouchante du puits central 11, tel que représenté à la figure 3a. Le clips 22 est prévu pour coopérer avec une gorge annulaire 23 ménagée sur le tourillon 10, tel que montré à la figure 3c, un décrochement 24 ménagé sur le tourillon 10 de sorte que l'extrémité 27 du tourillon emmanchée dans l'embase 9 présente un diamètre plus faible que la section 28 située au delà du décrochement 24, ou une nervure ménagée sur le tourillon 10 (non montrée aux figures). Selon une variante de cet exemple de réalisation, le clips 22 est remplacé par un joint torique.

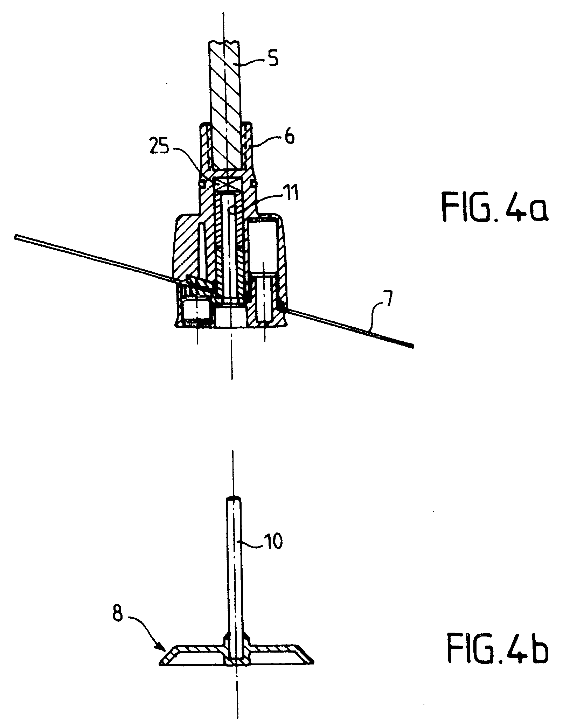

Selon un autre exemple de réalisation de la version préférée de l'invention, l'organe de maintien est un aimant 25 monté sur le moyeu 6, par exemple au fond du puits 11, tel que montré à la figure 4a, et coopère avec le tourillon 10, lequel est réalisé en matériau ferromagnétique, et peut être formé simplement d'une portion de tige cylindrique, emmanchée dans l'embase 9 pour former le moyen d'appui 8, tel que représenté à la figure 4b.

Selon une variante de réalisation, non montrée aux figures, le tourillon 10 est monté sur l'ensemble de travail rotatif, par exemple sur le moyeu 6, et l'organe de maintien est monté sur le moyen d'appui 8, par exemple sur l'embase 9.

Selon une autre variante avantageuse de l'invention, le moyen d'appui 8 forme également un moyen de centrage de l'ensemble de travail rotatif, et en particulier de l'axe d'entraînement 5 relativement au fond 3.

Selon une version avantageuse de l'invention non représentée aux figures, le moyen d'appui 8 peut constituer un moyen de centrage en association avec au moins une partie des parois latérales 3 du récipient 1. Dans une telle réalisation, le diamètre extérieur de l'embase 9 est sensiblement égal au diamètre du fond 3 de manière à permettre à l'embase 9 de se guider au moins en partie contre les parois latérales 3 lors de la mise en place de l'ensemble de travail dans le récipient 1. Un même moyen d'appui 8 peut ainsi servir pour plusieurs récipients de diamètres différents, par exemple, pour un petit diamètre, le moyen d'appui se prolonge jusqu'aux parois 3 alors que pour un récipient de grand diamètre, le même moyen d'appui correspond sensiblement à la portion centrale du récipient.

Selon une autre variante de réalisation, le moyen d'appui 8 forme un moyen de centrage en association avec une conformation 15 ménagée dans le fond 3 et dont le profil est adapté pour faciliter le centrage du moyen d'appui 8. Selon cette réalisation, la conformation 15 est formée par une collerette 16, de préférence partie intégrante du fond 3, dénivelée de préférence en faisant saillie en position centrale par rapport au fond 3 et à son plan général d'extension. Dans la version préférentielle montrée aux figures 1, 2 et 5, la collerette 16 présente en son centre une cavité, ou un bombage concave.

De manière à faciliter le centrage de l'embase 9 sur la collerette 16, l'embase 9 est pourvue à sa périphérie d'une jupe 9a formant un bord périphérique tombé, destinée à venir s'emboîter et épouser la périphérie externe de la collerette 16. Avantageusement la face interne de l'embase 9 est pourvue, de préférence dans la face interne de la jupe 9a, d'une série de crans longitudinaux 18 destinés à augmenter l'adhérence sur le fond 3, en particulier sur la collerette 16. Dans un tel cas, le diamètre de la collerette 16 est sensiblement identique au diamètre interne de la face inférieure de l'embase 9 pour que cette dernière vienne se bloquer en position fixe sur la collerette par emboîtement.
Le mode de fonctionnement de l'appareil conforme à l'invention est le suivant.

L'utilisateur met en place le moyen d'appui 8 contre le fond du récipient 1 de travail, puis monte l'ensemble de travail sur le moyen d'appui 8, tel que cela est représenté à la figure 2. Lorsque l'ensemble de travail comporte un organe de maintien, l'utilisateur peut également monter l'ensemble de travail sur le moyen d'appui, puis les mettre en place dans le récipient 1.

L'utilisateur introduit les ingrédients à traiter (viande, légume, fruit, etc...) de préférence après la mise en place du moyen d'appui 8 contre le fond du récipient 1, afin de faciliter cette opération. L'utilisateur peut aussi d'abord introduire tout ou partie des ingrédients, tant que ceux-ci n'empêchent pas la mise en place du moyen d'appui 8 contre le fond du récipient 1.

Le guidage et le centrage de l'ensemble de travail sont favorisés par l'emboîtement progressif de la jupe 9a sur la collerette 16 dont les dimensions et le profil sont adaptés ou conjugués. Lorsque l'embase 9 est contre le fond 3, l'ensemble de travail est parfaitement positionné et centré dans le récipient et l'utilisateur peut mettre en marche l'appareil.

Lors de la rotation de l'axe 5, l'embase 9 est fixe sur le fond 3 et bloquée en rotation par simple adhérence et pression alors que l'outil 7 est en rotation. L'utilisation de l'appareil et la mise en place de l'ensemble de travail rotatif sont par conséquent particulièrement simplifiés grâce à la progressivité naturelle du centrage de l'embase 9 sur la collerette 16.

En outre, la suppression de tout moyen, en particulier métallique de centrage solidaire du récipient 1 permet à ce dernier d'être utilisé dans des fours à micro-ondes. Ceci permet de supprimer toutes les étapes intermédiaires de montage, démontage et transvasement des produits ayant été traités dans le récipient 1. L'aspect esthétique d'un récipient sans insert métallique est également appréciable, tout comme la facilité de nettoyage d'un tel récipient.

Lorsque la préparation est réalisée, l'utilisateur retire l'ensemble de travail, puis le moyen d'appui. Lorsque l'ensemble de travail ou le moyen d'appui comporte un organe de maintien, l'utilisateur retire l'ensemble de travail et le moyen d'appui 8 et peut commencer à les nettoyer avant de les séparer pour réaliser un nettoyage plus poussé.

L'invention n'est nullement limitée strictement aux exemples de réalisation décrits précédemment, mais englobe de nombreuses modifications ou améliorations. Notamment, on peut envisager que l'outil de travail 7 soit d'un type différent de celui représenté aux figures.

### POSSIBILITE D'APPLICATION INDUSTRIELLE

L'invention trouve son application dans le domaine technique général des appareils électroménagers de préparation culinaire, du genre robot ménager multi-usages.

## Revendications

1. Appareil électroménager de préparation culinaire, du genre robot ménager multi-usages (ou polyvalent) comportant un récipient (1) de travail, un ensemble de travail rotatif (5,6,7) entraîné par un bloc moteur avec un axe entraîneur (5) apte à porter un outil de travail (7), ledit ensemble étant susceptible d'être mis en place dans le récipient (1) sensiblement contre le fond (3) dudit récipient en association avec un moyen d'appui (8) monté libre en rotation par rapport à l'ensemble de travail rotatif, **caractérisé en ce que** le moyen d'appui (8) est constitué d'un ensemble séparé du récipient et de l'ensemble de travail rotatif (5,6,7) de manière à être susceptible d'être mis en place dans le récipient (1) de travail indépendamment dudit ensemble de travail rotatif (5,6,7).

2. Appareil selon la revendication 1, **caractérisé en ce qu'**il comporte un organe de maintien monté sur le moyen d'appui (8) ou sur l'ensemble de travail (5,6,7 pour solidariser de manière amovible le moyen d'appui (8) et l'ensemble de travail (5,6,7).

3. Appareil selon l'une des revendications 1 ou 2 **caractérisé en ce que** l'ensemble de travail comporte un moyeu (6), de préférence emmanché sur l'extrémité de l'axe entraîneur (5), ledit moyeu (6) supportant l'outil de travail.

4. Appareil selon l'une des revendications 1 à 3 **caractérisé en ce que** le moyen d'appui (8) est formé par une embase (9) susceptible d'être montée libre à rotation à l'extrémité de l'ensemble de travail par l'intermédiaire d'un tourillon (10).

5. Appareil selon la revendication 4 **caractérisé en ce que** le tourillon (10) est emmanché sur l'embase (9).

6. Appareil selon la revendication 4 **caractérisé en ce que** le tourillon (10) est emmanché sur le moyeu (6).

7. Appareil selon l'une des revendications 4 à 6 **caractérisé en ce que** l'organe de maintien est un clips (22) ou un joint torique, monté sur le moyeu (6) ou sur l'embase (9), et prévu pour coopérer avec une gorge annulaire (23) ou un décrochement (24) ménagé sur le tourillon (10).

8. Appareil selon l'une des revendications 4 à 6 **caractérisé en ce que** l'organe de maintien est un aimant (25) monté sur le moyeu (6) ou sur l'embase (9) et coopérant avec le tourillon (10), lequel est réalisé en matériau ferromagnétique.

9. Appareil selon l'une des revendications 4 à 8 **caractérisé en ce que** l'embase (9) est un disque, de préférence sensiblement circulaire, réalisé dans un matériau souple.

10. Appareil selon l'une des revendications 4 à 9 **caractérisé en ce que** l'embase (9) comporte à sa face inférieure, destinée à venir en contact avec le fond (3) du récipient (1), une série de crans (18) pour augmenter l'adhérence.

11. Appareil selon l'une des revendications 1 à 10 **caractérisé en ce que** le moyen d'appui (8) forme également un moyen de centrage de l'axe (5) relativement au fond (3).

12. Appareil selon la revendication 11 **caractérisé en ce que** le moyen d'appui (8) forme un moyen de centrage en association avec une conformation (15) ménagée dans le fond (3) et de profil adapté pour faciliter le centrage du moyen d'appui (8).

13. Appareil selon la revendication 12 **caractérisé en ce que** le moyen d'appui (8) forme un moyen de centrage en association avec au moins une partie des parois latérales du récipient (1), contre lesquelles il est guidé lors de la mise en place de l'axe (5) avec l'outil (7).

14. Appareil selon la revendication 12 **caractérisé en ce que** la conformation (15) est formée par une collerette (16) dénivelée par rapport au fond (3).

15. Appareil selon la revendication 14 **caractérisé en ce que** la collerette (16) est partie intégrante du récipient (1) et de dimension et profil adaptés à l'embase (9) pour que cette dernière vienne se bloquer en position fixe sur la collerette (16), par emboîtement.

16. Appareil selon l'une des revendications 1 à 15 **caractérisé en ce que** le récipient (1) est en verre.

## Patentansprüche

1. Elektro-Küchenmaschine zum Zubereiten von Nahrungsmitteln, von der Art einer Viel- bzw. Mehrzweckküchenmaschine, mit einem Arbeitsbehälter (1), einer drehbaren Arbeitsvorrichtung (5, 6, 7), die von einem Motorblock mit einer Antriebsachse (5) angetrieben wird, welche ein Arbeitswerkzeug (7) tragen kann, wobei die genannte Vorrichtung in den Behälter (1) im wesentlichen am Boden (3) des genannten Behälters in Verbindung mit einem Abstützmittel (8) einsetzbar ist, das gegenüber der drehbaren Arbeitsvorrichtung frei drehbar gelagert ist, **dadurch gekennzeichnet, dass** das Abstützmittel (8) aus einer vom Behälter und von der drehbaren Arbeitsvorrichtung (5, 6, 7) separaten Vorrichtung besteht, so dass es unabhängig von der genannten drehbaren Arbeitsvorrichtung (5, 6, 7) in den Arbeitsbehälter (1) einsetzbar ist.

2. Maschine nach Anspruch 1, **dadurch gekennzeichnet, dass** sie ein Halteglied enthält, das am Abstützmittel (8) oder an der Arbeitsvorrichtung (5, 6, 7) montiert ist, um das Abstützmittel (8) und die Arbeitsvorrichtung (5, 6, 7) lösbar zu verbinden.

3. Maschine nach Anspruch 1 oder 2, **dadurch gekennzeichnet, dass** die Arbeitsvorrichtung eine Nabe (6) enthält, die vorzugsweise mit dem Ende der Antriebsachse (5) verpresst ist, wobei die genannte Nabe (6) das Arbeitswerkzeug trägt.

4. Maschine nach einem der Ansprüche 1 bis 3, **dadurch gekennzeichnet, dass** das Abstützmittel (8) aus einer Fußfläche (9) gebildet ist, die über einen Zapfen (10) frei drehbar am Ende der Arbeitsvorrichtung lagerbar ist.

5. Maschine nach Anspruch 4, **dadurch gekennzeichnet, dass** der Zapfen (10) mit der Fußfläche (9) verpresst ist.

6. Maschine nach Anspruch 4, **dadurch gekennzeichnet, dass** der Zapfen (10) mit der Nabe (6) verpresst ist.

7. Maschine nach einem der Ansprüche 4 bis 6, **dadurch gekennzeichnet, dass** das Halteglied eine Klemme (22) bzw. ein O-Ring ist, die bzw. der an der Nabe (6) bzw. an der Fußfläche (9) montiert und dazu vorgesehen ist, mit einer Ringnut (23) bzw. einer Stufe (24) zusammenzuwirken, die am Zapfen (10) ausgeführt ist.

8. Maschine nach einem der Ansprüche 4 bis 6, **dadurch gekennzeichnet, dass** das Halteglied ein an der Nabe (6) oder an der Fußfläche (9) montierter Magnet (25) ist, der mit dem Zapfen (10) zusammenwirkt, der aus ferromagnetischem Material hergestellt ist.

9. Maschine nach einem der Ansprüche 4 bis 8, **dadurch gekennzeichnet, dass** die Fußfläche (9) eine Scheibe ist, die vorzugsweise im wesentlichen kreisförmig und aus einem nachgiebigen Material hergestellt ist.

10. Maschine nach einem der Ansprüche 4 bis 9, **dadurch gekennzeichnet, dass** die Fußfläche (9) an ihrer Innenseite, die mit dem Boden (3) des Behälters (1) in Kontakt gelangen soll, eine Reihe von Rastkerben (18) aufweist, um die Haftfestigkeit zu erhöhen.

11. Maschine nach einem der Ansprüche 1 bis 10, **dadurch gekennzeichnet, dass** das Abstützmittel (8) auch ein Mittel zum Zentrieren der Achse (5) bezüglich des Bodens (3) ist.

12. Maschine nach Anspruch 11, **dadurch gekennzeichnet, dass** das Abstützmittel (8) ein Zentriermittel in Verbindung mit einer Ausformung (15) bildet, die im Boden (3) ausgeführt ist und deren Profil darauf abgestimmt ist, das Zentrieren des Abstützmittels (8) zu erleichtern.

13. Maschine nach Anspruch 12, **dadurch gekennzeichnet, dass** das Abstützmittel (8) ein Zentriermittel in Verbindung mit zumindest einem Teil der Seitenwände des Behälters (1) bildet, an denen es beim Einsetzen der Achse (5) mit dem Werkzeug (7) geführt ist.

14. Maschine nach Anspruch 12, **dadurch gekennzeichnet, dass** die Ausformung (15) durch einen Kragen (16) gebildet ist, der bezüglich des Bodens (3) stufenförmig ausgeführt ist.

15. Maschine nach Anspruch 14, **dadurch gekennzeichnet, dass** der Kragen (16) Bestandteil des Behälters (1) ist, dessen Abmessungen und Profil auf die Fußfläche (9) abgestimmt sind, damit diese durch Aufstecken in fester Stellung am Kragen (16) gesichert ist.

16. Maschine nach einem der Ansprüche 1 bis 15, **dadurch gekennzeichnet, dass** der Behälter (1) aus Glas besteht.

## Claims

1. A domestic appliance for preparing food, the appliance being of the multipurpose food-processor type and comprising a work receptacle (1), a rotary work assembly (5, 6, 7) driven by a motor block with a drive shaft (5) capable of carrying a work tool (7), said assembly being suitable for being put in place in the receptacle (1) substantially against the bottom (3) of said receptacle in association with support means (8) mounted to rotate freely relative to the rotary work assembly, the appliance being **characterized in that** the support means (8) is constituted by an assembly that is separate from the receptacle and from the rotary work assembly (5, 6, 7) in such a manner as to be suitable for being put in place in the work receptacle (1) independently of said rotary work assembly (5, 6, 7).

2. An appliance according to claim 1, **characterized in that** it includes a holding member mounted on the support means (8) or on the work assembly (5, 6, 7) so as to secure in removable manner the support means (8) and the work assembly (5, 6, 7).

3. An appliance according to claim 1 or claim 2, **characterized in that** the work assembly includes a core (6), preferably engaged on the end of the drive shaft (5), said core (6) supporting the work tool.

4. An appliance according to any one of claims 1 to 3, **characterized in that** the support means (8) is formed by a base (9) capable of being mounted to rotate freely at the end of the work assembly by means of a journal (10).

5. An appliance according to claim 4, **characterized in that** the journal (10) is engaged in the base (9).

6. An appliance according to claim 4, **characterized in that** the journal (10) is engaged in the core (6)

7. An appliance according to any one of claims 4 to 6, **characterized in that** the holding member is a clip (22) or an O-ring, mounted on the core (6) or on the base (9), and provided to co-operate with an annular groove (23) or a setback (24) formed on the journal (10).

8. An appliance according to any one of claims 4 to 6, **characterized in that** the holding member is a magnet (25) mounted on the core (6) or on the base (9) and co-operating with the journal (10), which is made of ferromagnetic material.

9. An appliance according to any one of claims 4 to 8, **characterized in that** the base (9) is a disk, preferably substantially circular, made of a flexible material.

10. An appliance according to any one of claims 4 to 9, **characterized in that** the base (9) includes, on its bottom face designed to come into contact with the bottom (3) of the receptacle (1), a series of catches (18) for increasing adherence.

11. An appliance according to any one of claims 1 to 10, **characterized in that** the support means (8) also form centering means for centering the shaft (5) relative to the bottom (3).

12. An appliance according to claim 11, **characterized in that** the support means (8) form centering means in association with a shape (15) formed in the bottom (3), and of profile adapted to facilitate centering of the support means (8).

13. An appliance according to claim 12, **characterized in that** the support means (8) form centering means in association with at least a portion of the side walls of the receptacle (1), against which walls said support means is guided while the shaft (5) with the tool (7) is being put in place.

14. An appliance according to claim 12, **characterized in that** the shape (15) is formed by a collar (16) that is raised relative to the bottom (3).

15. An appliance according to claim 14, **characterized in that** the collar (16) is an integral part of the receptacle (1) and is of size and profile that are adapted to the base (9) so that said base becomes blocked in a fixed position on the collar (16), by interfitting engagement.

16. An appliance according to any one of claims 1 to 15, **characterized in that** the receptacle (1) is made of glass.
